# EUROPÄISCHE PATENTSCHRIFT

(11) **EP 1 262 395 B1**
(45) Veröffentlichungstag und Bekanntmachung des Hinweises auf die Patenterteilung: **06.09.2006**
(21) Anmeldenummer: 02009006.4
(22) Anmeldetag: 23.04.2002
(51) Int. Cl.: B62D 21/09

(54) **Aufbaustruktur für ein Kraftfahrzeug mit zusammengesetzten Trägern**
Frame structure for a motor vehicle with compound beams
Structure de chassis pour véhicule automobile avec poutres composées

(30) Priorität: 30.05.2001 DE 10126234
(43) Veröffentlichungstag der Anmeldung: 04.12.2002
(73) Patentinhaber: Dr.Ing. h.c.F. Porsche Aktiengesellschaft, 70435 Stuttgart (DE)
(72) Erfinder: Burgers, Christiaan, 71296 Heimsheim (DE)

(56) Entgegenhaltungen:
- EP-A- 0 921 055
- DE-A- 4 414 472
- DE-A- 19 504 127
- DE-A- 19 531 957
- DE-A- 19 812 679

## Beschreibung

Die Erfindung bezieht sich auf eine Aufbaustruktur für ein Kraftfahrzeug mit zusammengesetzten Trägern nach dem Oberbegriff des Patentanspruchs 1.

Aus der US 4,674,770 ist ein Träger bekannt, der im Querschnitt aus einem U-Profil besteht und innenseitig Verstärkungsprofile aufweist, die einerseits mit einem Profilboden und andererseits als Deckelung angeordnet sind. Desweiteren sind aus der US 2,136,122 Träger bekannt, die mit einem Profileinsatz verstärkt sind, der aus einem im Querschnitt U-förmigen Profilteil besteht.

Aufgabe der Erfindung ist es, Längsträger in einer Aufbaustruktur im Verbindungsbereich zum Verschweißen gut zugänglich zu gestalten und gleichzeitig soll eine Verstärkung dieses Verbindungsbereiches im Träger geschaffen werden.

Diese Aufgabe wird erfindungsgemäß durch die Merkmale des Patentanspruchs 1 gelöst. Weitere vorteilhafte Merkmale beinhalten die Unteransprüche.

Die mit der Erfindung hauptsächlich erzielten Vorteile bestehen darin, daß einerseits der Verbindungsbereich der Träger beispielsweise für eine Punktschweißanlage gut zugänglich ist und andererseits die verbundenen Träger in diesem Bereich im Nachhinein verstärkt werden können. Dies wird im wesentlichen dadurch erzielt, indem die zusammengesetzten Träger im Verbindungsbereich ein Deckblech aufweisen, das mit darunter angeordneten Schottblechen verbindbar ist, wobei zwischen den endseitigen Verbindungsbereichen des Deckbleches mit den Schottblechen sich querverlaufende Hohlträger ausbilden.

Damit der Verbindungsbereich der zusammengesetzten Träger vor dem Verbinden gut zugänglich ist, werden benachbarte Schottbleche beabstandet zueinander im Träger angeordnet und befestigt, so daß im Verbindungsbereich der Träger eine Arbeitsöffnung zum Verbindungsbereich der Träger gebildet wird.

Die Verstärkungswirkung über die Schottbleche wird durch querverlaufende Eindrückungen unterstützt, die sich über die gesamte Länge der Schottbleche erstrecken. An diese Eindrückungen schließen sich Schenkel an, die von Schenkeln des Deckbleches überdeckt sind, und die übereinander angeordneten Schenkel des Deckbleches und der Schottbleche bilden gemeinsam die Hohlträger.

Damit in vorteilhafter Weise die über ein Deckblech miteinander verbundenen Schottbleche zusätzlich zu den Eindrückungen stabilisierend wirken können, ist vorgesehen, daß die Hohlträger aus zwei im Abstand zueinander angeordneten gegenüberstehenden Absetzungen an den endseitigen Schenkeln des Deckbleches und der Schottbleche gebildet werden und diese Schenkel mit den gegenüberstehenden Schottblechen bzw. dem Deckblech verbindbar sind.

Die Träger werden vorzugsweise mit eingesetzten Schottblechen versehen, das heißt, diese Bleche sind bei Anlieferung schon in die Träger eingesetzt, das heißt, mit diesen mittels einer Punktschweißung verbunden.

Ein Ausführungsbeispiel der Erfindung ist in den Zeichnungen dargestellt und wird im folgenden näher beschrieben.

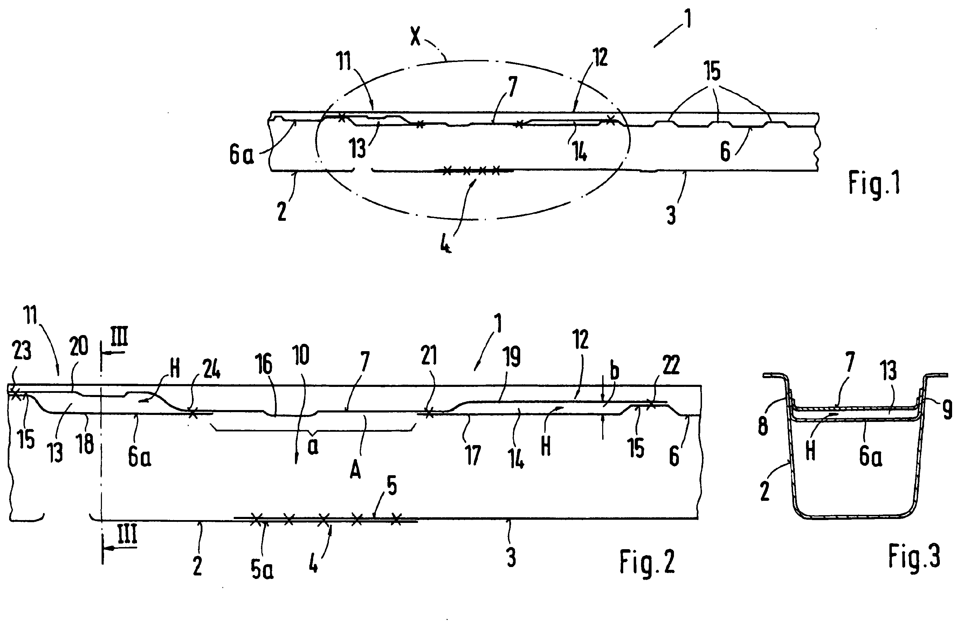

Es zeigen
- Fig. 1: zwei miteinander verbundene Längsträger einer Aufbaustruktur mit verstärkenden Schottblechen und einem Deckblech,
- Fig. 2: eine vergrößerte Darstellung des Ausschnitts X gem. Fig. 1 und
- Fig. 3: einen Schnitt nach der Linie III-III der Fig. 2.

Eine Aufbaustruktur eines Fahrzeugs umfaßt u.a. einen Längsträger 1, der aus mehreren Einzelträgern 2, 3 usw. zusammengesetzt wird. Die Längsträger 2, 3 sind im Querschnitt U-profilförmig ausgebildet und weisen einen nach oben hin offenen Querschnitt auf.

Die einzelnen Träger 2 und 3 werden im Verbindungsbereich 4, welcher sich an den Stegen 5, 5a der U-Profile der beiden Träger 2 und 3 befindet, miteinander beispielsweise durch eine Punktschweißung verbunden.

Dieser Verbindungsbereich 4 weist aufgrund der Trennung des Längsträgers 1 in die Trägerteile 2 und 3 eine verminderte Festigkeit auf. Durch die Anordnung von in das Profil der Längsträger 2, 3 eingesetzte Schottbleche 6, 6a sowie eines mit diesen Schottblechen verbundenen Deckbleches 7 wird der Längsträger 1 wieder verstärkt.

Im Verbindungsbereich 4 der Träger 2, 3 besteht aufgrund einer Doppelung der Wandstärken eine relativ große Steifigkeit, wobei neben diesem Verbindungsbereich 4 ein sogenannter Steifigkeitssprung besteht, der sich in einer geringeren Steifigkeit auswirkt. Dieser Steifigkeitsprung wird durch das Deck- und Schottblech 7, 6a, 6 wieder aufgehoben, wobei hierzu insbesondere die gebildeten Hohlträger 13 und 14 wesentlich beitragen.

Die Schottbleche 6, 6a und das Deckblech 7 im Längsträger 1 bestehen aus im Querschnitt U-profilförmigen Profilen, welche mit ihren Schenkeln an den Schenkeln 8, 9 des Trägers 2, 3 befestigbar sind.

Damit der Verbindungsbereich 4 zwischen den Trägern 2, 3 von oben her in Pfeilrichtung 10 zum Punktschweißen gut zugänglich ist, sind die benachbarten Schottbleche 6, 6a beabstandet mit einem Maß a zueinander angeordnet. Dieser Abstand a wird nach dem Punktschweißen des Verbindungsbereiches 4 von dem Deckblech 7 abgedeckt, das oberhalb der Schottbleche 6, 6a liegt und mit diesen verbunden wird. Zwischen den endseitigen Verbindungsbereichen 11, 12 der Schottbleche 6, 6a mit dem Deckblech 7 bilden sich im Träger 1 sogenannte querverlaufende Hohlträger 13, 14 aus.

Die Schottbleche 6, 6a sind mit mehreren nebeneinander angeordneten querverlaufenden Eindrückungen 15 versehen, wobei das Deckblech 7 ebenfalls oberhalb des Verbindungsbereiches 4 mindestens eine querverlaufende Sicke bzw. eine Eindrückung 16 aufweist.

An die Eindrückungen 15 der Schottbleche schließen sich einander zugerichtete Schenkel 17, 18 der Schottbleche 6, 6a, auf denen mit Abstand b Schenkel 19, 20 des Deckbleches 7 angeordnet sind, an. Zwischen diesen Schenkeln 17, 18 und 19, 20 bilden sich Hohlräume H, die mit den Schenkeln die Hohlträger 13, 14 ausbilden. Die aufeinander angeordneten Schenkel 17, 19 und 18, 20 sind jeweils mit ihren freien Enden zumindest in den Punkten 21, 22 und 23, 24 miteinander verbunden.

Die Schottbleche 6, 6a erstrecken sich in Längsrichtung der Träger 2, 3, wobei oberhalb jeden Verbindungsbereiches 4 zwischen den Trägern 2, 3 die Schottbleche 6, 6a eine sogenannte Arbeitsöffnung A mit dem Längenabstand a bilden, die vom Deckblech 7 geschlossen wird. Die Schottbleche 6, 6a erstrecken sich mindestens über die gesamte Länge der Längsträger 2, 3 des Fahrzeugaufbaus.

## Patentansprüche

1. Aufbaustruktur für ein Kraftfahrzeug mit zusammengesetzten Trägern, insbesondere Längsträgern (2, 3), die aus Profiten bestehen und Verstärkungen aus Stegteilen (6, 6a) aufweisen, welche innenseitig der Träger befestigt sind, **dadurch gekennzeichnet, daß** die zusammengesetzten Träger (2, 3) im Verbindungsbereich (4) ein Deckblech (7) aufweisen, das mit darunter angeordneten Schottblechen (6, 6a) verbunden ist und zwischen den endseitigen Verbindungsbereichen des Deckbleches (7) mit den Schottblechen (6, 6a) sich querverlaufende Hohlträger (13, 14) ausbilden.

2. Aufbaustruktur nach Anspruch 1, **dadurch gekennzeichnet, daß** zwischen den freien Enden der Schottbleche (6, 6a) im Verbindungsbereich (4) der Träger (2, 3) eine Arbeitsöffnung (A) zum Verbindungsbereich (4) der Träger (2, 3) gebildet wird.

3. Aufbaustruktur nach den Ansprüchen 1 oder 2, **dadurch gekennzeichnet, daß** die Schottbleche (6, 6a) querverlaufende Eindrückungen (15) aufweisen, an welche Schenkel (17, 18) anschließen, die von Schenkeln (19, 20) des Deckbleches (7) überdeckt sind und die übereinander angeordneten Schenkel (17, 19 und 20, 18) des Deckbleches (7) und der Schottbleche (6, 6a) gemeinsam die Hohlträger (13, 14) bilden.

4. Aufbaustruktur nach den Ansprüchen 1, 2 oder 3, **dadurch gekennzeichnet, daß** die Hohlträger (13, 14) aus zwei im Abstand zueinander angeordneten gegenüberstehenden Absetzungen an den endseitigen Schenkeln (17, 19 und 18, 20) des Deckbleches (7) und der Schottbleche (6, 6a) gebildet werden und die Schenkel (17, 19 und 18, 20) jeweils am freien Ende mit den gegenüberstehenden Schottblechen (6, 6a) bzw. dem Deckblech (7) verbindbar sind.

5. Aufbaustruktur nach den Ansprüchen 1, 2, 3 oder 4, **dadurch gekennzeichnet, daß** das Deckblech (7) im Verbindungsbereich (4) der beiden Träger (2, 3) mindestens eine querverlaufende Sicke (16) aufweist.

6. Aufbaustruktur nach Anspruch 1 oder einem der vorhergehenden Ansprüche, **dadurch gekennzeichnet, daß** zu beiden Seiten des Verbindungsbereichs (4) der beiden Träger (2, 3) ein Steifigkeitssprung besteht, der durch die vom Deck- und Schottblech (7, 6, 6a) gebildeten Hohlträger (13, 14) aufgehoben wird.

## Claims

1. A body structure for a motor vehicle with composite beams, especially longitudinal beams (2, 3), which comprise sections and have reinforcements comprising web parts (6, 6a) which are fixed to the inside of the beams, **characterised in that** the composite beams (2, 3) have, in the connecting region (4), a covering plate (7) which is connected to partitioning plates (6, 6a) arranged therebelow, and transversely extending hollow supports (13, 14) are formed between the end connecting regions of the covering plate (7) and the partitioning plates (6, 6a).

2. A body structure according to claim 1, **characterised in that** a working opening (A) to the connecting region (4) of the beams (2, 3) is formed between the free ends of the partitioning plates (6, 6a) in the connecting region (4) of the beams (2, 3).

3. A body structure according to claim 1 or claim 2, **characterised in that** the partitioning plates (6, 6a) have transversely extending indentations (15) adjoined by arms (17, 18) which are covered by arms (19, 20) of the covering plate (7), and the arms (17, 19 and 20, 18) - arranged one above the other - of the covering plate (7) and the partitioning plates (6, 6a) together form the hollow supports (13, 14).

4. A body structure according to claim 1, 2 or 3, **characterised in that** the hollow supports (13, 14) are formed by two mutually spaced, opposing shoulders on the end arms (17, 19 and 18, 20) of the covering plate (7) and the partitioning plates (6, 6a), and the arms (17, 19 and 18, 20) are each connectable at their free end to the opposing partitioning plates (6, 6a) or the covering plate (7).

5. A body structure according to claim 1, 2, 3 or 4, **characterised in that** the covering plate (7) has at least one transversely extending bead (16) in the connecting region (4) of the two beams (2, 3).

6. A body structure according to claim 1 or any one of the preceding claims, **characterised in that**, on either side of the connecting region (4) of the two beams (2, 3), there is a jump in stiffness which is compensated for by the hollow supports (13, 14) formed by the covering and partitioning plates (7, 6, 6a).

## Revendications

1. Structure de carrosserie puur véhicule automobile avec poutres assemblées, en particulier longerons (2, 3) qui sont constitués de profilés et comportent des renforts constitués d'entretoises (6, 6a) qui sont fixées sur la face intérieure des poutres, **caractérisée en ce que** les poutres (2, 3) assemblées comportent, dans la zone de liaison (4), une tôle de couverture (7) qui est reliée à des tôles de cloisonnement (6, 6a) disposées au-dessous et entre les zones de liaison côté extrémité de la tôle de couverture (7) avec les tôles de cloisonnement (6, 6a), sont réalisées des poutres creuses (13, 14) s'étendant transversalement.

2. Structure de carrosserie selon la revendication 1, **caractérisée en ce qu'**entre les extrémités libres des tôles de cloisonnement (6, 6a), dans la zone de liaison (4) des poutres (2, 3), il est formé une ouverture de travail (A) vers la zone de liaison (4) des poutres (2, 3).

3. Structure de carrosserie selon les revendications 1 ou 2, **caractérisée en ce que** les tôles de cloisonnement (6, 6a) présentent des renfoncements (15) s'étendant transversalement auxquels se raccordent des ailes (17et 18) qui sont recouvertes par les ailes (19, 20) de la tôle de couverture (7), et les ailes (17, 19 et 20, 18) superposées de la tôle de couverture (7) et des tôles de cloisonnement (6, 6a) forment ensemble les poutres creuses (13, 14).

4. Structure de carrosserie selon les revendications 1, 2 ou 3, **caractérisée en ce que** les poutres creuses (13, 14) sont formées par deux décrochements en vis-à-vis et écartés l'un de l'autre sur les ailes côté extrémité (17, 19 et 18, 20) de la tôle de couverture (7) et des tôles de cloisonnement (6, 6a), et chacune des ailes (17, 19) et 18, 20) peut être reliée à l'extrémité libre aux tôles de couverture (6, 6a) ou aux tôles de cloisonnement (6, 6a) opposées ou à la tôle de couverture (7).

5. Structure de carrosserie selon les revendications 1, 2, 3 ou 4, **caractérisée en ce que** la tôle de couverture (7) présente dans la zone de liaison (4) des deux poutres (2, 3), au moins une moulure (16) s'étendant transversalement.

6. Structure de carrosserie selon la revendication 1 ou l'une des revendications précédentes, **caractérisée en ce que** des deux côtés de la zone de liaison (4) des deux poutres (2, 3) il existe un saut de rigidité qui est supprimé par les poutres creuses (13, 14) formées par la tôle de couverture et tôle de cloisonnement (7, 6, 6a).
